(19) Europäisches Patentamt
European Patent Office
Office européen des brevets

(11) Publication number: **0 196 684**
**B1**

(12) **EUROPEAN PATENT SPECIFICATION**

(45) Date of publication of patent specification: **01.06.88**

(51) Int. Cl.$^4$: **B 60 J 7/22**

(21) Application number: **86200161.7**

(22) Date of filing: **05.02.86**

(54) **Air guiding mechanism for an open roof construction, and an open roof construction provided with this air guiding mechanism.**

(30) Priority: **05.03.85 NL 8500619**

(43) Date of publication of application:
**08.10.86 Bulletin 86/41**

(45) Publication of the grant of the patent:
**01.06.88 Bulletin 88/22**

(84) Designated Contracting States:
**DE FR GB IT NL SE**

(56) References cited:
**DE-A-2 100 715**
**DE-A-2 533 516**
**DE-B-1 149 627**
**DE-B-1 262 135**
**FR-A-2 185 037**
**FR-A-2 564 787**
**GB-A- 980 012**

(73) Proprietor: **Vermeulen-Hollandia Octrooien II B.V.**
**Küppersweg 9-11**
**NL-2031 EA Haarlem (NL)**

(72) Inventor: **Boots, Robert Theodoor**
**Saeftinge 97**
**NL-2036 GZ Haarlem (NL)**

(74) Representative: **de Vries, Johannes Hendrik Fokke et al**
**Octrooibureau Los en Stigter B.V. P.O. Box 20052**
**NL-1000 HB Amsterdam (NL)**

**EP 0 196 684 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to an air guiding mechanism for an open roof construction with a sliding panel, for a vehicle having a roof opening, the mechanism comprising an air guiding strip, which is of size to be fitted at the front edge of the roof opening, a stationary member which is adapted to be secured to a vehicle roof and supports the air guiding strip, spring means coupled to the air guiding strip and the stationary member to displace the air guiding strip upwardly into an operative position when the panel is being moved to its opened position, the air guiding strip being returned to a rest position against the pressure of the spring means under action of the panel when the panel is being moved to its closed position, wherein the operative position on the air guiding strip is determined by a stop.

In a known embodiment of such an air guiding mechanism (see DE—A—2.533.516), during the upward displacement of the air guiding strip it comes into engagement with a horizontal edge portion of the fixed roof at the front side of the roof opening, the edge portion thereby forming a stop for the air guiding strip and determining the operative position thereof.

However, the problem arises that after installation of the open roof construction in the vehicle roof such edge portion is not always available, in which cases a stop for the air guiding strip is missing.

It is an object of the present invention to provide an open roof construction, in which the above problem is effectively solved.

To this end the air guiding mechanism according to the invention is characterized in that the stop is carried on a blocking means interconnecting the air guiding strip and the stationary member and conteracting the force of the spring means when the air guiding strip is in its upward operative position.

In this way the air guiding mechanism itself, has a stop, which is independent of the vehicle roof. Preferably the stop is adjustable. Hereby the operative position of the air guiding strip can very easily be adjusted to different vehicle roofs.

Further the invention relates to an open roof construction provided with the air guiding mechanism described hereinbefore.

The invention will hereafter be elucidated with reference to the drawing, which shows an embodiment of an air guiding mechanism according to the invention by way of example.

Fig. 1 is a schematic plan view of the opening in a vehicle roof in the fully opened position of the sliding panel, wherein the air guiding mechanism according to the invention can be seen.

Fig. 2 is an enlarged section along the line II—II in fig. 1, partially broken away, wherein, however, the panel is in its closed position.

Fig. 3 is a section corresponding to fig. 2, wherein the panel is, however, in its partially opened position.

The drawing illustrates an open roof construction for a vehicle, specifically an automobile, which is provided with an air guiding mechanism.

The fixed roof 1 of the vehicle comprises an opening 2, which can be closed by means of a sliding panel 3. An air guiding strip 4 is fitted on the front side of the roof opening 2, this air guiding strip 4 comprising a central strip portion 5, which connects both sides by way of a bend 6 to a rearward bearing arm 7.

The central strip portion 5 as well as the bends 6 and rearward bearing arms 7 are of a substantially rigid construction and have a groove 8 in their lower surface, in which a thickening 9 of an elastic sealing section 10 is accommodated.

The bearing arms 7 are pivotally connected on their rear end to a gutter construction 11 of the open roof construction on both sides of the roof opening 2. To this end on each gutter construction 11 an U-shaped bearing section 12 is provided, whose rear portion is connected to a pivot shaft 13. This pivot shaft 13 passes through the rear end of the respective bearing arm 7, so that the respective bearing arm 7 and thereby the whole air guiding strip 4 can pivot about this pivot shaft 13. Each bearing arm 7 is provided with a recess 14 at its lower side, which recess 14 partially accommodated the bearing section 12 and further a compression spring means 15 in the downwardly pivoted position of the air guiding strip 4.

This compression means 15 comprises a compression spring 18, accommodated in telescopic bushes 16, 17. The lower bush 16 is pivotally connected to the front portion of the bearing section 12 by means of a transverse shaft 19. The upper bush 17 pivotally engages the bearing arm 7 near the front side thereof by means of a transverse shaft 20 provided in the respective bearing arm 7.

The bearing section 12 is not only connected to the respective bearing arm 7 of the air guiding strip 4 through the pivot shaft 13 and the telescopic bushes 16, 17 but further also by means of an adjustable blocking strip 21. At the side of the air guiding strip 4 this blocking trip 21 is provided with a stop 22, which can be locked in the direction of the blocking strip 21 by means of a counter stop 23 formed at the upper bush 17. This counter stop 23 further forms a guiding, which engages around an end portion of the blocking strip 21 provided with a stop 22 in such a way that the upper bush 17 is only movable in the longitudinal direction of this end portion of the blocking strip 21.

At the side of the bearing section 12 the blocking strip 21 has a slot 24 extending in the longitudinal direction of the vehicle, which slot 24 is gutted for a screw 25 which further passes through a slot 26 in the bearing section 12 and through a hole in the gutter construction 11, the screw 25 clamping the blocking strip 21 onto the bearing section 12 and the bearing section 12 onto the gutter construction 11 by means of an nut 27 disposed underneath the gutter construction 11.

The slot 24 in the blocking strip 21 serves for adjusting the stop 22 formed on the blocking strip 21 and consequently for the height adjustment of the air guiding strip 4. The slot 26 in the bearing section 12 enables the air guiding strip 4 to be adjusted in the longitudinal direction of the gutter construction 11.

A draw spring 29 engages the rear end 28 of the blocking strip 21, that lies at the side of the slot 24 and which is bent to an upwardly and backwardly inclined direction, the draw spring 29 being connected to the bearing section 12 at its other end and exerting a rearwardly directed tensive force onto the blocking strip 21. The purpose of this draw spring 29 will be elucidated hereinafter.

The blocking strip 21 is flexible and is guided between its ends around the lower end of the lower bush 16.

Fig. 2 illustrates the panel 3 in its closed position, wherein a cam 30 provided on both sides underneath the panel 3 has come to engage with the respective bearing arm 7 of the air guiding strip 4 and has brought this into a downwardly pivoted position against the spring compression of the compression spring 18.

In fig. 3 the panel has been slid backwardly, while the engagement of the cams 30 underneath the panel 3 with the bearing arms 7 of the air guiding strip 4 has been released and the compression springs 18 have pivoted the air guiding strip 4 into a highest or operative position, which is determined by the stop 22 of the blocking strip 21.

The adjustment of the highest or operative position of the air guiding strip 4 can be carried out as follows:

In an opened position of the panel 3, as shown in fig. 3 the screws 25, which can be reached through a hole 31 in the respective bearing arm 7 are turned loose. The compression springs 18 in the telescopic bushes 16, 17 push the front side of the air guiding strip 4 upwardly, whereby the bearing arms 7 pivot about the pivot shafts 13 until the rear ends of the slots 24 which move forwardly as a consequence of the pivoting movement of the blocking strips 21 come into engagement with the respective screws 25.

In this position the air guiding strip 4 has reached its extreme outwardly pivoted position. During this pivoting movement the compressive force of the compression springs 18 should exceed the action of the draw springs 29, so that the stops 22 of the blocking strips 21 can be carried along by the counter stops 23.

When the air guiding strip 4 is hereafter moved downwardly, for instance by hand until the operative position thereof has been reached, each draw spring 29 will keep the respective blocking strip 21 with its stop 22 in contact with the counter stop 23 of the upper bush 17, so that the slot 24 in the blocking strip 21 moves backwardly with respect to the screw 25.

When in the operative position the screws 25 are tightened, so that the blocking strips 21 are clamped with respect to the respective bearing sections 12 the upward pivoting movement of the rear guiding strip 4 is limited up to this operative position.

In the working position the elastic sealing section 10 joints to the vertical wall at the front side of the roof opening 2.

**Claims**

1. Air guiding mechanism for an open roof construction with a sliding panel (3), for a vehicle having a roof opening (2), the mechanism comprising an air guiding strip (4), which is of size to be fitted at the front edge of the roof opening (2), a stationary member (12) which is adapted to be secured to a vehicle roof (1, 11) and supports the air guiding strip (4), spring means (15) coupled to the air guiding strip (4) and the stationary member (12) to displace the air guiding strip (4) upwardly into an operative position when the panel (3) is being moved to its opened position, the air guiding strip (4) being returned to a rest position against the pressure of the spring means (15) under action of the panel (3) when the panel is being moved to its closed position, wherein the operative position of the air guiding strip (4) is determined by a stop (22), characterized in that the stop (22) is carried on a blocking means (21) interconnecting the air guiding strip (4) and the stationary member (12) and counteracting the force of the spring means (15) when the air guiding strip is in its upward operative position.

2. Air guiding mechanism according to claim 1, characterized in that the stop (22) is adjustable.

3. Air guiding mechanism according to claim 1 or 2, characterized in that the blocking means (21) together with the stop (22) fixed thereto is adjustable.

4. Air guiding mechanism according to claim 3, characterized in that the blocking means (21) can be adjustably mounted at one of its ends and carries the stop (22) at its other end, the stop (22) co-operating with a counter stop (23).

5. Air guiding mechanism according to claim 4, characterized in that the blocking means (21) includes a blocking strip.

6. Air guiding mechanism according to claim 5, characterized in that the blocking strip (21) is provided with a longitudinal slot (24) at the end facing away from the stop (22), the slot (24) being adapted for a screw (25), which co-operates with a nut (27).

7. Air guiding mechanism according to claim 6, characterized in that after installation thereof in the vehicle the blocking strip (21) can be fixed with respect to the vehicle at the location of the slot (24).

8. Air guiding mechanism according to claim 6 or 7, characterized in that a spring (29) engages the end of the blocking strip that lies near the slot (24), the spring (29) exerting a force onto this blocking strip, which is effective in a direction in the extension of the slot (24) and facing away from the blocking strip (21).

9. Air guiding mechanism according to one of the claims 5 to 8, wherein the air guiding strip (21) connects at both sides to a rearward rigid bearing arm (7), which is pivotally mounted on a bearing section serving as said stationary member (12) and with which the panel (3) engages when it is being closed, while each spring means (15) is provided underneath the respective bearing arm (7) and consists of a compression spring (18) accommodated in a telescopic bush assembly (16, 17), the lower part (16) of the bush assembly being pivotally connected to the bearing section (12) and the upper part (17) of the bush assembly being pivotally connected to the bearing arm (7), characterized in that two blocking strips (21) are used each provided with a stop (22), and at the upper part (17) of each bush assembly a guiding member (23) is formed for the end portion of the respective blocking strip (21) that includes the stop (22), the guiding member (23) being slidable in the longitudinal direction of the respective end portion of the blocking strip (21) and further serving as counter stop for the stop (22) on the blocking strip (21).

10. Air guiding mechanism according to claim 9, characterized in that each blocking strip (21) is guided between its ends around the lower end of the lower part (16) of the respective bush assembly.

11. Air guiding mechanism according to claim 9 or 10, characterized in that each bearing section (12) can be mounted in such way that it is adjustable in the longitudinal direction of the vehicle.

12. Air guiding mechanism according to claim 11, characterized in that each bearing section (12) is provided with a longitudinal slot (26) for a mounting screw.

13. Air guiding mechanism according to claim 12, characterized in that each screw (25) for the respective blocking strip (21) also serves as mounting screw for the respective bearing section (12).

14. Open roof construction provided with an air guiding mechanism according to one of the preceding claims.

**Patentansprüche**

1. Windabweiser für eine Schiebedachkonstruktion mit einem verschiebbaren Deckel (3), für ein Fahrzeug mit einer Dachöffnung (2) mit einer Windabweisleiste (4), die so bemessen ist, daß sie an dem vorderen Begrenzungsrand der Dachöffnung (2) angebracht werden kann, einem stationären Teil (12), das an einem Fahrzeugdach (1, 11) befestigbar ist und das die Windabweisleiste (4) trägt, einer Federeinrichtung (15), die mit der Windabweisleiste (4) und dem stationären Teil (12) gekuppelt sind, um die Windabweisleiste (4) nach oben in eine Arbeitsstellung zu verlagern, wenn der Deckel (3) in seine Offenstellung bewegt wird, wobei die Windabweisleiste (4) gegen den Druck der Federeinrichtung (15) unter Wirkung des Deckels (3) in eine Ruhestellung zurückgebracht wird, wenn der Deckel in seine Schließstellung bewegt wird, wobei die Arbeitsstellung der Windabweisleiste von einem Anschlag (22) bestimmt wird, dadurch gekennzeichnet, daß der Anschlag (22) auf einer Sperreinrichtung (21) getragen wird, die die Windabweisleiste (4) und das stationäre Teil (11) miteinander verbindet und der Kraft der Federeinrichtung (15) entgegenwirkt, wenn die Windabweisleiste (4) sich in ihrer oberen Arbeitsstellung befindet.

2. Windabweiser nach Anspruch 1, dadurch gekennzeichnet, daß der Anschlag (22) verstellbar ist.

3. Windabweiser nach Anspruch 1 oder 2, dadurch gekennzeichnet, daß die Sperreinrichtung (21) zusammen mit dem an ihr befestigten Anschlag (22) verstellbar ist.

4. Windabweiser nach Anspruch 3, dadurch gekennzeichnet, daß die Sperreinrichtung (21) an einem ihrer Enden verstellbar befestigbar ist und an ihrem anderen Ende den Anschlag (22) trägt, wobei der Anschlag (22) mit einem Gegenanschlag (23) zusammenwirkt.

5. Windabweiser nach Anspruch 4, dadurch gekennzeichnet, daß die Sperreinrichtung (21) eine Sperrleiste enthält.

6. Windabweiser nach Anspruch 5, dadurch gekennzeichnet, daß die Sperrleiste (21) an dem dem Anschlag (22) abgewandten Ende mit einem Längsschlitz (24) versehen ist, der an eine Schraube (25) angepaßt ist, die mit einer Mutter (27) zusammmenwirkt.

7. Windabweiser nach Anspruch 6, dadurch gekennzeichnet, daß nach Installierung desselben in dem Fahrzeug die Sperrleiste (21) gegenüber dem Fahrzeug an dem Ort des Schlitzes (24) festgelegt werden kann.

8. Windabweiser nach Anspruch 6, dadurch gekennzeichnet, daß eine Feder (29) in das Ende der Sperrleiste eingreift, das nahe an dem Schlitz (24) liegt, wobei die Feder (29) auf die Sperrleiste ein Kraft ausübt, die in eine Richtung in Verlängerung des Schlitzes (24) von der Sperrleiste (21) wegwirkt.

9. Windabweiser nach einem der Ansprüche 5 bis 8, bei dem die Windabweisleiste (4) an beiden Seiten mit einem hinteren steifen Tragarm (7) verbuden ist, der schwenkbar auf einem Trägerabschnitt angebracht ist, der als das stationäre Teil (12) dient und in den der Deckel (3) eingreift, wenn er geschlossen wird, während jede Federeinrichtung (15) unterhalb des jeweiligen Tragarms (7) vorgesehen ist und aus einer Kompressionsfeder (18) besteht, die in einer teleskopischen Buchsenanordnung (16, 17) untergebracht ist, wobei der untere Teil (16) der Buchsenanordnung gelenkig mit dem Trägerabschnitt (12) verbunden ist und der obere Teil (17) der Buchsenanordnung gelenkig mit dem Tragarm (7) verbunden ist, dadurch gekennzeichnet, daß zwei Sperrleisten (21) verwendet werden, von denen jede mit einem Anschlag (22) versehen ist, und an dem oberen Teil (17) jeder Buchsenanordnung ein Führungsteil (23) für den Endabschnitt der jeweiligen Sperrleiste (21) ausgebildet ist, die den Anschlag (22) enthält, wobei das Führungsteil (23) in die Längsrichtung des jeweiligen Endabschnittes der Sperrleiste (21) verschiebbar ist und desweiteren als Gegenanschlag für den Anschlag (22) auf der Sperrleiste (21) dient.

10. Windabweiser nach Anspruch 9, dadurch gekennzeichnet, daß jede Sperrleiste (21) zwischen ihren Enden um das untere Ende des unteren Teils (16) der jeweiligen Buchsenanordnung geführt ist.

11. Windabweiser nach Anspruch 9 oder 10, dadurch gekennzeichnet, daß jeder Trägerabschnitt (12) so angebracht werden kann, daß er in Längsrichtung des Fahrzeugs verstellbar ist.

12. Windabweiser nach Anspruch 11, dadurch gekennzeichnet, daß jeder Trägerabschnitt (12) mit einem Längsschlitz (26) für eine Montageschraube versehen ist.

13. Windabweiser nach Anspruch 12, dadurch gekennzeichnet, daß jede Schraube (25) für die jeweilige Sperrleiste (21) auch als Montageschraube für den jeweiligen Trägerabschnitt (12) dient.

14. Schiebedachkonstruktion, versehen mit einem Windabweiser nach einem der vorangehenden Ansprüche.

**Revendications**

1. Mécanisme déflecteur d'air pour toit ouvrant à panneau coulissant (3), pour un véhicule présentant une ouverture de toit (2), le mécanisme comprenant une bande déflectrice d'air (4) qui est dimensionnée pour s'ajuster sur le bord avant de l'ouverture de toit (2), un élément fixe (12) qui est conçu pour être fixé à un toit (1, 11) de véhicule et qui supporte le bande déflectrice d'air (4), un moyen à ressort (15) relié à la bande déflectrice d'air (4) et à l'élément fixe (12) pour déplacer la bande déflectrice d'air (4) vers le haut jusque dans une position de travail lorsque le panneau (3) est amené vers sa position ouverte, la bande déflectrice d'air étant ramenée vers une position de repos contre la pression du moyen à ressort (15) sous l'action du panneau (3) lorsque le panneau est déplacé vers sa position fermée, la position de travail de la bande déflectrice d'air (4) étant déterminée par une butée (22), caractérisé en ce que la butée (22) est portée par un moyen de blocage (21) reliant entre eux la bande déflectrice d'air (4) et l'élément fixe (12) et agissant à l'encontre de la force du moyen à ressort (15) lorsque la bande déflectrice d'air est dans sa position haute de travail.

2. Mécanisme déflecteur d'air selon la revendication 1, caractérisé en ce que la butée (22) est réglable.

3. Mécanisme déflecteur d'air selon la revendication 1 ou 2, caractérisé en ce que le moyen de blocage (21) est réglable avec la butée (22) qui lui est fixée.

4. Mécanisme déflecteur d'air selon la revendication 3, caractérisé en ce que le moyen de blocage (21) peut être monté de façon réglable, à l'une de ses extrémités, et porte la butée (22) à son autre extrémité, la butée (22) coopérant avec une contre-butée (23).

5. Mécanisme déflecteur d'air selon la revendication 4, caractérisé en ce que le moyen de blocage (21) comprend une bande de blocage.

6. Mécanisme déflecteur d'air selon la revendication 5, caractérisé en ce que la bande (21) de blocage présente une fente longitudinale (24) à l'extrémité opposée à la butée (22), la fente (24) étant conçue pour une vis (25) qui coopére avec un écrou (27).

7. Mécanisme déflecteur d'air selon la revendication 6, caractérisé en ce que, après son installation dans le véhicule, la bande de blocage (21) peut être fixée par rapport au véhicule à l'emplacement de la fente (24).

8. Mécanisme déflecteur d'air selon la revendication 6 ou 7, caractérisé en ce qu'un ressort (29) est enclenché avec l'extrémité de la bande de blocage qui s'étend à promixité de la fente (24), le ressort (29) exerçant, sur cette bande de blocage, une force qui agit dans la direction du prolongement de la fente (24) et qui est orientée dans un sens s'éloignant de la bande (21) de blocage.

9. Mécanisme déflecteur d'air selon l'une des revendications 5 à 8, dans lequel la bande déflectrice d'air (21) est reliée des deux côtés à un bras porteur rigide (7) orienté vers l'arrière, qui est monté de façon à pivoter sur un profilé porteur constituant ledit élément fixe (12) et contre lequel porte le panneau (3) lorsqu'il est fermé, tandis que chaque moyen à ressort (15) est prévu au-dessous du bras porteur respectif (7) et est constitué d'un ressort de compression (18) logé dans un ensemble de fourreaux télescopiques (16, 17), la partie inférieure (16) de l'ensemble de fourreaux étant reliée de façon pivotante au profilé porteur (12) et la partie supérieure (17) de l'ensemble de fourreaux étant reliée de façon pivotante au bras porteur (7), caractérisé en ce que deux bandes (21) de blocage sont utilisées et munies chacune d'une butée (22), et, à la partie supérieure (17) de chaque ensemble de fourreaux, est formé un élément (23) de guidage pour le tronçon extrême de la bande de blocage respective (21) qui comprend la butée (22), l'élément (23) de guidage pouvant coulisser dans la direction longitudinale du tronçon extrême respectif de la bande (21) de blocage et servant en outre de contre-butée pour la butée (22) située sur la bande (21) de blocage.

10. Mécanisme déflecteur d'air selon la revendication 9, caractérisé en ce que chaque bande (21) de blocage est guidée entre ses extrémités autour de l'extrémité inférieure de la partie inférieure (16) de l'ensemble de fourreaux respectif.

11. Mécanisme déflecteur d'air selon la revendication 9 ou 10, caractérisé en ce que chaque profilé porteur (12) peut être monté de façon à être réglable dans la direction longitudinale du véhicule.

12. Mécanisme déflecteur d'air selon la revendication 11, caractérisé en ce que chaque profilé porteur (12) présente une fente longitudinale (26) pour une vis de montage.

13. Mécanisme déflecteur d'air selon la revendication 12, carctérisé en ce que chaque vis (25) pour la bande de blocage respective (21) sert également de vis de montage pour le profilé porteur respectif (12).

14. Toit ouvrant muni d'un mécanisme déflecteur d'air selon l'une quelconque des revendications précédentes.

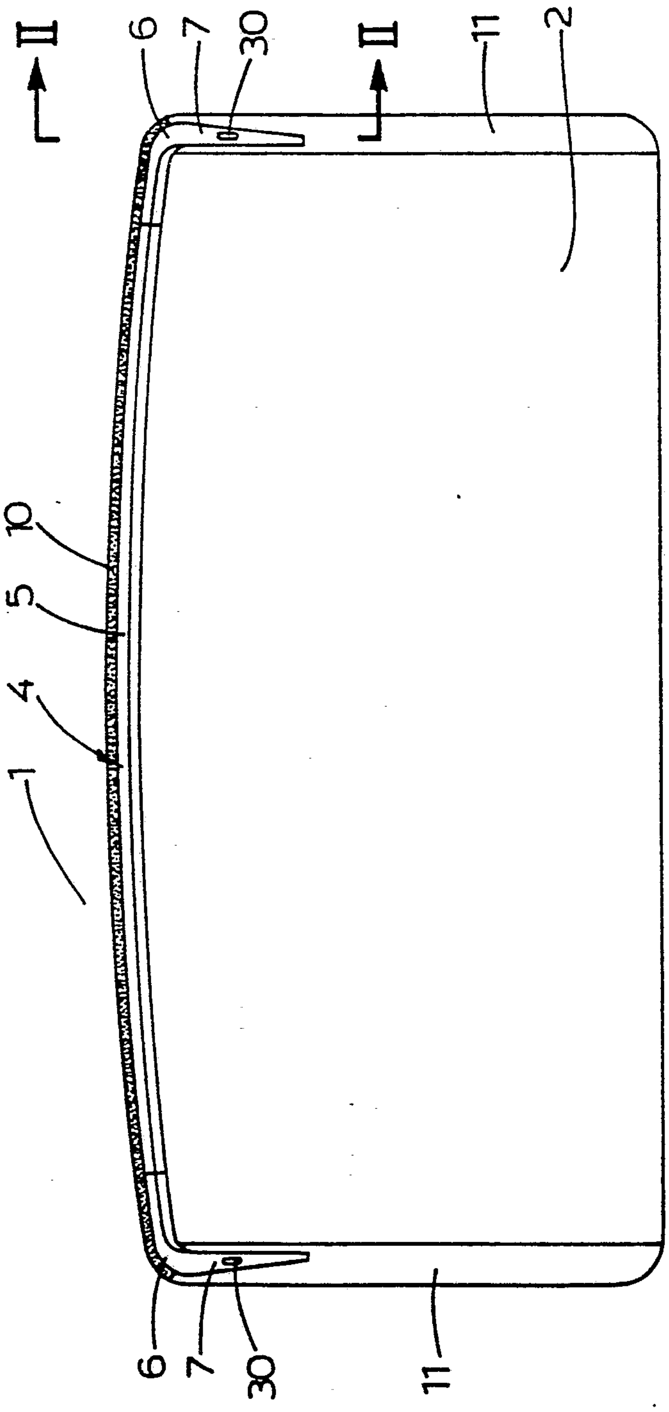


fig.1

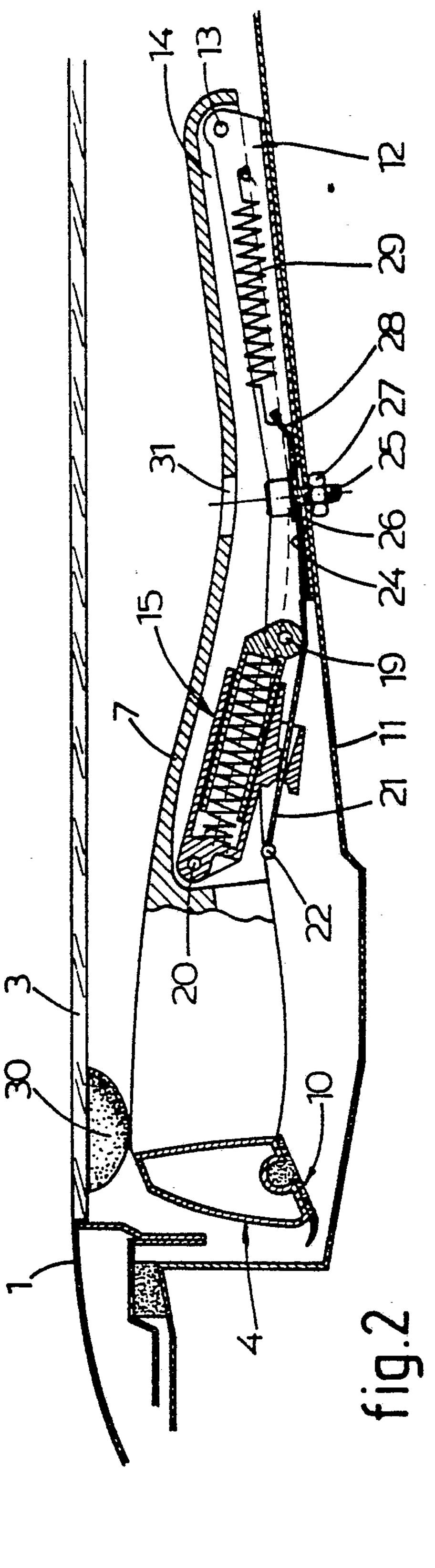
1
3
30
4
10
20
22
7
15
21
11
19
24
26
31
25
27
28
29
14
13
12

fig.2

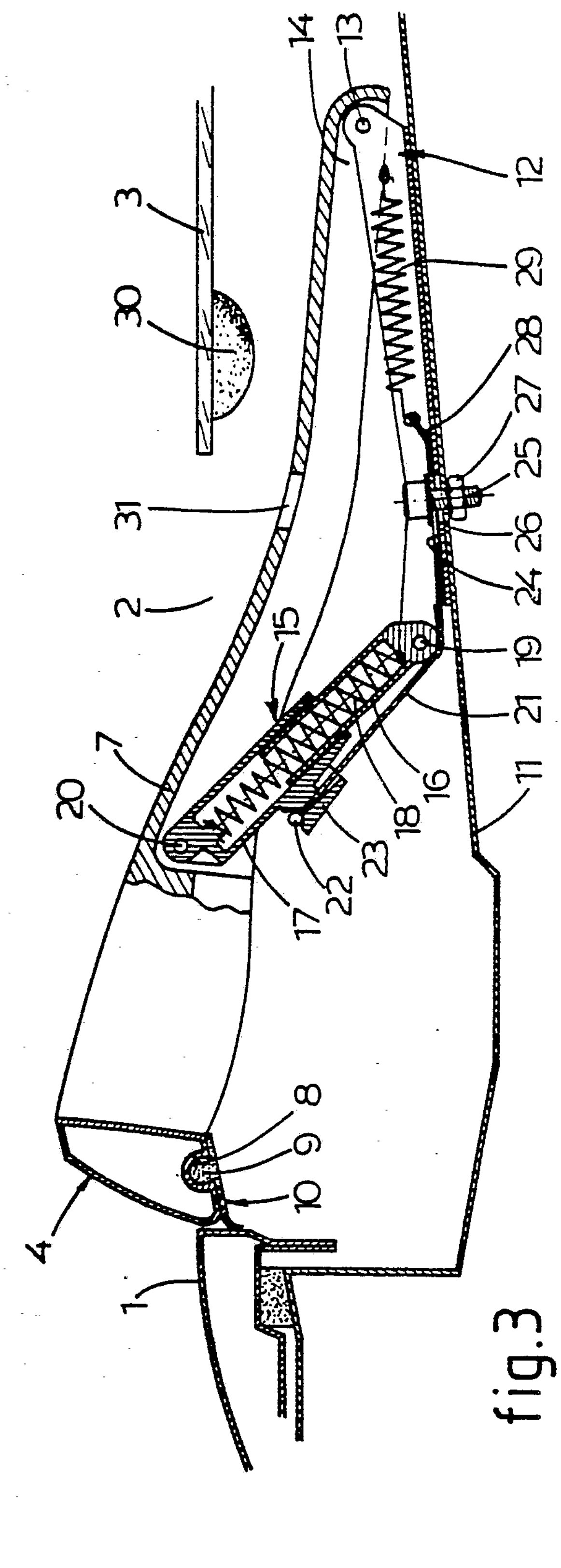
1
4
10
9
8
17
20
22
23
18
7
16
15
21
11
19
2
24
26
31
25
30
3
27
28
29
14
13
12

fig.3